# EUROPÄISCHE PATENTSCHRIFT

(11) **EP 3 677 111 B1**
(45) Veröffentlichungstag und Bekanntmachung des Hinweises auf die Patenterteilung: **09.02.2022**
(21) Anmeldenummer: 19000593.4
(22) Anmeldetag: 22.12.2019
(51) Int. Cl.: A01D 46/247

(54) **FRÜCHTEPFLÜCK- UND SAMMELVORICHTUNG**
FRUIT PLUCKING AND COLLECTION DEVICE
DISPOSITIF DE CUEILLETTE ET DE COLLECTE DES FRUITS

(30) Priorität: 02.01.2019 DE 102019000042
(43) Veröffentlichungstag der Anmeldung: 08.07.2020
(73) Patentinhaber: Hacker, Josef, 84424 Mittbach (DE)
(72) Erfinder: Hacker, Josef, 84424 Mittbach (DE)
(74) Vertreter: Hartz, Nikolai

(56) Entgegenhaltungen:
- KR-B1- 101 323 682
- US-A- 2 113 518
- US-A- 4 350 005
- US-A- 4 835 955

## Beschreibung

Die Erfindung betrifft eine Früchtepflück- und Sammelvorrichtung nach den Patentansprüchen 1, 3 und 8.

Die KR 101323682 B1 zeigt eine Früchtepflückvorrichtung, die auf Grund der fehlenden Kugelform lediglich zum Pflücken von Früchten vorgesehen ist. Hierbei ist ein durchsichtiger Korb 10 mit in etwa geradem Boden und einer von diesem ausgehenden, nach oben gerichteten in etwa zylindrischen Korbwandung beschrieben. Die Korbwandung wird durch einen oberen Ring 11 abgeschlossen. Über diesen Ring 11 hinaus erstrecken sich vier, über etwa den halben Umfang des Korbes 10 verteilte Wandelemente 21, die voneinander beabstandet sind und somit zwischen sich drei Schlitze ausbilden. Die Schlitze enden am Ring 11. Die Wandelemente 21 sind ab dem Ring 11 zum Korbmittelpunkt hin geneigt und ihr oberes Ende ist noch einmal zum Mittelpunkt hin gebogen. Sie überbrücken mit dieser Neigung und Biegung etwa den halben Abstand bis zur Korbmitte.

In der Mitte des Korbbodens 11 ist eine senkrecht nach unten weisende runde Aufnahmehülse 300 für einen Stiel 200 vorgesehen.

Die AT 1493858 B beschreibt eine Pflückvorrichtung für Obst mit einem an einem Stiel angebrachten Ring, dessen oberer Rand mit Ausnehmungen versehen ist. Mit diesem Ring wird das Obst von seinem Stiel gelöst und fällt in einen an dem Ring unten angebrachten Beutel oder Sack. Werden mehrere Früchte gepflückt, fällt die neu gepflückte Frucht auf die bereits im Sack befindliche und kann diese beschädigen. Zur Entleerung muss der Obstpflücker zu einer Kiste gebracht und ausgeleert werden, was zu einer weiteren möglichen Schädigung der bereits in der Kiste befindlichen Früchte führen kann.

Weitere korbartige Pflückvorrichtungen sind aus der US 2 113 518 A, der US 4 350 005 A und der US 4835955 A bekannt.

Somit ist es die Aufgabe der Erfindung, eine Früchtepflück- und Sammelvorrichtung anzubieten, die das Pflücken und Entleeren der Vorrichtung für den Anwender komfortabler macht und die gepflückten Früchte nicht beschädigt.

Diese Aufgabe wird durch eine Vorrichtung mit den Merkmalen der Patentansprüche 1, 3 und 8 gelöst.

Weitere Ausgestaltungen der Erfindung sind in den Unteransprüchen angegeben.

Ausführungsbeispiele der Erfindung werden nachfolgend anhand der Figuren näher erläutert.

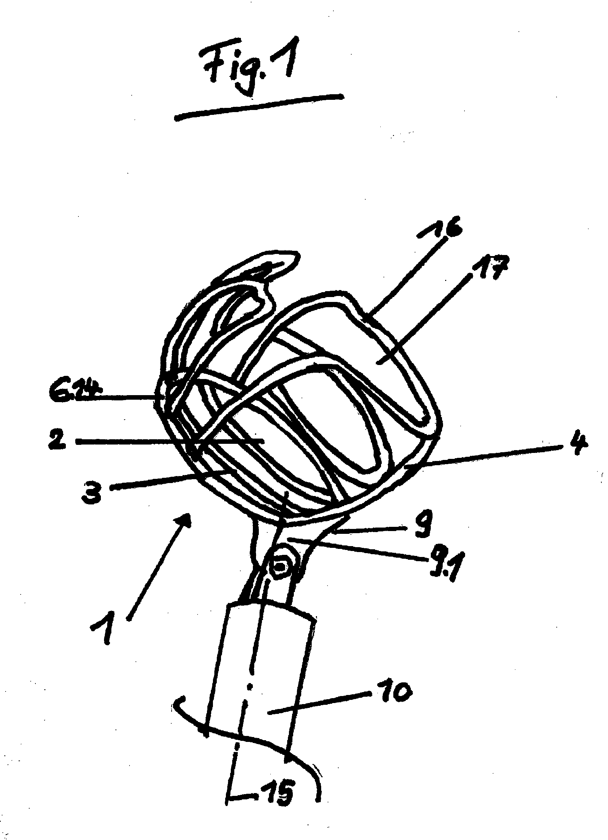

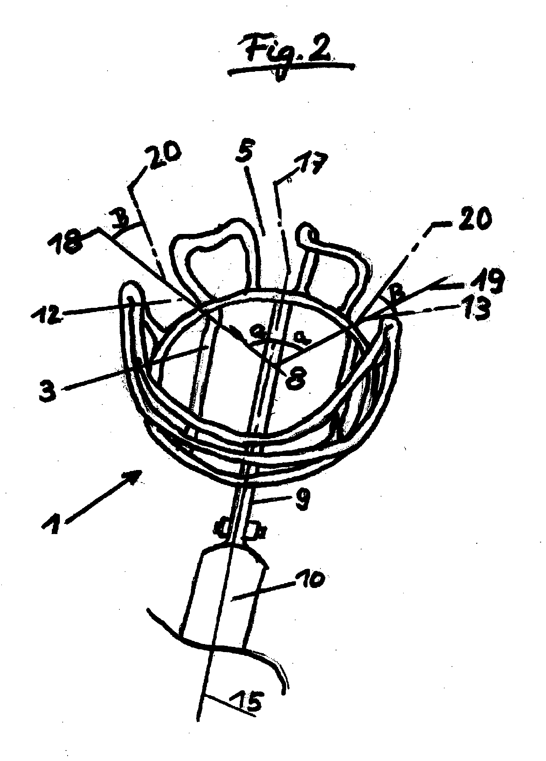

Die Figuren 1 und 2 zeigen die Früchtepflück- und Sammelvorrichtung 1 gemäß Patentanspruch 1. Sie besteht aus einem korbförmigen Sammelbehälter 2, bestehend aus einem kugelförmig nach unten gewölbten Korbboden 3 und einer kugelförmig ausgebildeten Korbwand 4. Am Rand des Korbbodens 3 im Bereich der Übergangsstelle/ linie 6, 14 Korbboden 3/ Korbwand 4 ist eine in die entgegengesetzte Richtung zur Korböffnung 7 weisende flächige Lasche 9, deren Fläche 9.1 parallel zur Mittellinie 15 des Korbes ausgerichtet ist, angebracht, an der der Stiel 10 befestigbar ist. Die Korbwand 4 des Sammelbehälters 2 weist drei Schlitze 5, 12, 13 auf. Der erste Schlitz 5 liegt der Lasche 9 gegenüber auf derselben Korbmittellinie 15. Er hat eine Breite von bevorzugt ca. 30 mm, reicht vom oberen Ende 16 der Korbwand 4 bis zur Übergangsstelle/ linie 6, 14 Korbboden 3/ Korbwand 4. Seine Mittellinie 17 ist parallel zur Lasche 9 ausgerichtet. Die Mittellinien 18, 19 der beiden anderen Schlitze 12, 13 sind links und rechts des ersten Schlitzes 5 in einem Winkel α von bevorzugt 45°, gemessen an der Übergangslinie 6, 14 Korbboden 3/ Korbwand 4 angeordnet. Die Schlitze 12, 13 weisen ebenfalls eine bevorzugte Breite von ca. 30 mm auf, reichen ebenfalls vom oberen Ende 16 der Korbwand 4 bis zur Übergangstelle/ linie 6/ 14 Korbboden 3/ Korbwand 4, sind jedoch ausgehend von der Senkrechten 20 auf der Übergangsstelle/ linie 6, 14 Korbboden 3/ Korbwand 4 um einen Winkel β von bevorzugt 20° in Richtung der Lasche 9 geneigt.

Der Sammelbehälter 2 ist an der Verbindungsstelle Stiel 10 / Lasche 9 relativ zum Stiel 10 parallel zur Lasche 9/ Stielachse verschwenkbar.

Der Sammelbehälter 2 hat die bevorzugten Abmessungen von ca. 120 mm Durchmesser an der Übergangsstelle/ linie 6, 14 Korbboden 3/ Korbwand 4, ca. 160 mm Durchmesser auf halber Höhe 11 der Korbwand 4 und ca. 120 mm Durchmesser am oberen Ende 16 der Korbwand 4. Die Abmessungen können jedoch dem Einsatzgebiet angepasst werden. Sichergestellt werden muss jedoch die Neigung der Schlitze 12, 13 links und rechts des mittleren Schlitzes 5

In einer Ausführungsform kann die Früchtepflück- und Sammelvorrichtung 1 aus gebogenem Draht gefertigt sein. Der Drahtabstand bei Sammelbehälterwand - und Boden beträgt hierbei vorzugsweise ca. 30 mm, Eine andere Möglichkeit der Fertigung besteht darin, die Vorrichtung durch Spritzgießen herzustellen. Hierbei kann durch die Verwendung von durchsichtigem Material auch ein bis auf die Schlitze geschlossener Sammelbehälter gefertigt werden, da das Material durchschaubar ist. Wenn der Sammelbehälter aus undurchsichtigem Kunststoff ähnlich einer Drahtkonstruktion hergestellt wird, ist auch hier der bevorzugte Abstand der Konstruktionselemente ca. 30 mm.

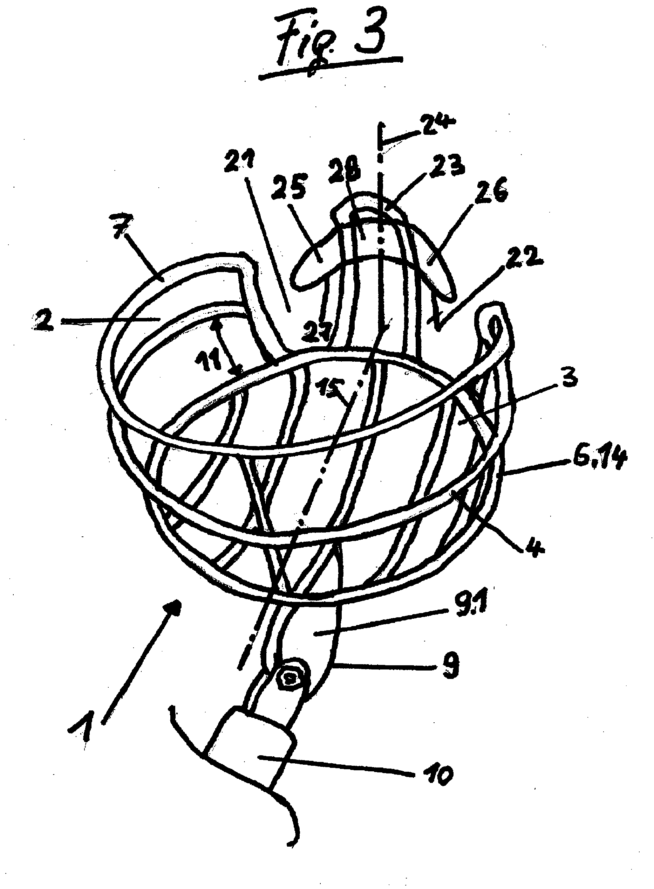

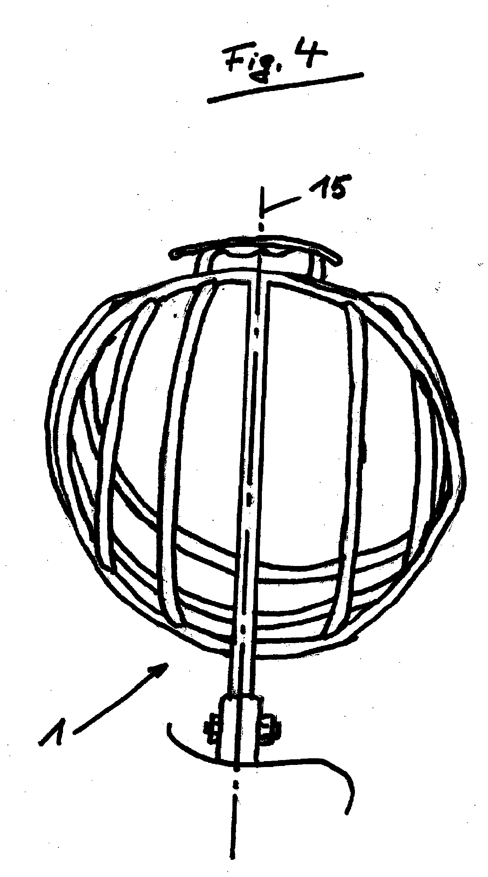

Die Figuren 3 und 4 zeigen die Früchtepflück- und Sammelvorrichtung 1 gemäß Patentanspruch 3. Sie besteht aus einem korbförmigen Sammelbehälter 2, bestehend aus einem gewölbten Korbboden 3 und einer kugelförmig ausgebildeten Korbwand 4. Am Rand des Korbbodens 3 im Bereich der Übergangsstelle/ linie 6, 14 Korbboden 3/ Korbwand 4 ist eine in die entgegengesetzte Richtung zur Korböffnung 7 weisende flächige Lasche 9, deren Fläche 9.1 parallel zur Mittellinie 15 des Korbes ausgerichtet ist, angebracht, an der der Stiel 10 befestigbar ist. Die Korbwand 4 des Sammelbehälters 2 weist zwei Schlitze 21, 22 auf. Die Schlitze 21, 22 sind durch ein der Lasche 9 gegenüberliegendes Wandelement 23, dessen Mittellinie 24 senkrecht auf der Mittellinie 15 des Korbbodens und senkrecht auf der Umfangslinie 14 des Korbbodens steht, getrennt, wobei das Wandelement 23 eine bevorzugte Breite von ca. 40 mm aufweist. In ca. 2/3 der Höhe des Wandelements 23 ist beidseitig des Wandelements 23 ein in den jeweiligen Schlitz 21, 22 reichendes Stielabtrennelement 25, 26 angebracht. Dieses Element deckt ca. 1/3 der Schlitzbreite ab und ist auf der zum Korbboden 3 weisenden Seite mit einer Schneide 27 versehen. Die Schneide 27 ist zum Korbboden 3 hin von der Senkrechten in einem Winkel γ von 65° bis 85 ° geneigt. Die Stielabtrennelemente 25, 26 können auch in einem Extrabauteil 28 zusammengefasst und außen an dem Wandelement 23 angebracht sein. Wenn der Sammelbehälter aus undurchsichtigem Kunststoff ähnlich einer Drahtkonstruktion hergestellt wird, ist auch hier der bevorzugte Abstand der Konstruktionselemente ca. 30 mm.

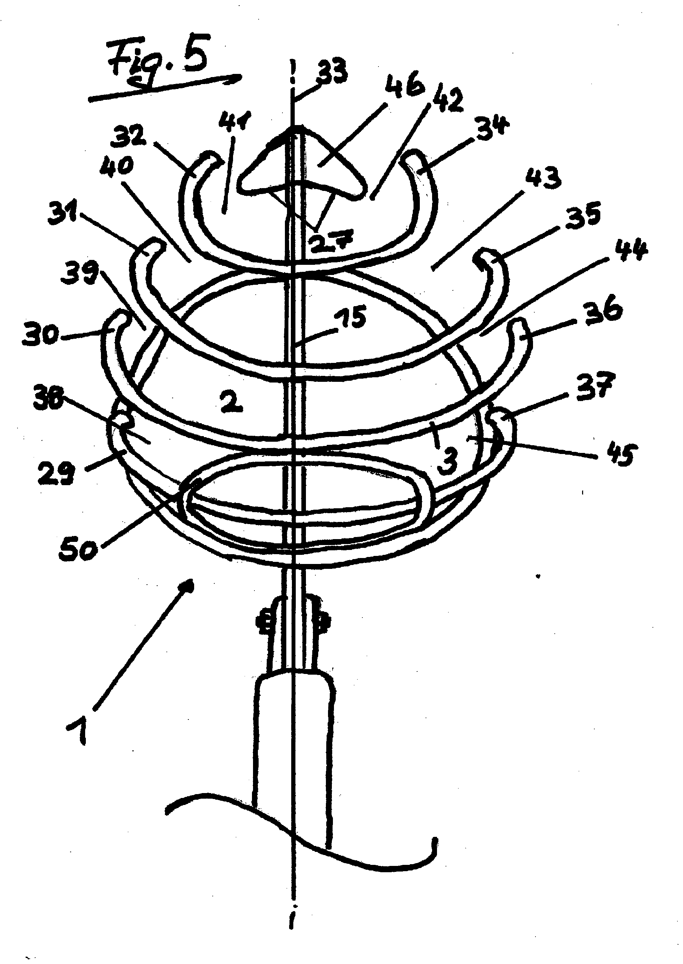

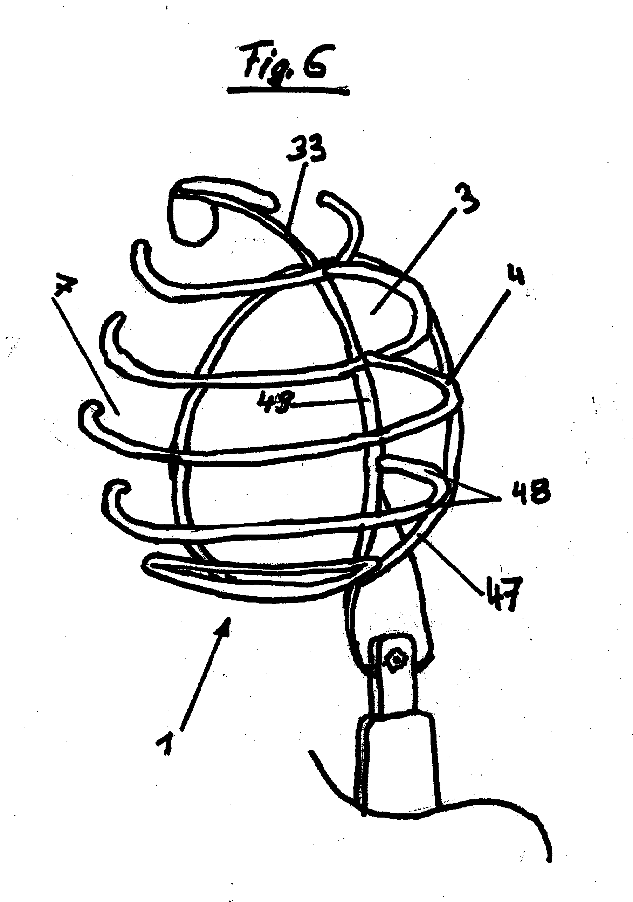

Die Figuren 5 und 6 zeigen die Früchtepflück- und Sammelvorrichtung 1 gemäß Patentanspruch 8. Sie besteht aus einem korbförmigen Sammelbehälter 2, bestehend aus einem gewölbten Korbboden 3 und einer kugelförmig ausgebildeten Korbwand 4.

In diesem Lösungsvorschlag wird der Sammelbehälter 2 ausgehend von einem Ring 47 aufgebaut, in den mit einem Abstand von bevorzugt 30 mm einstückige und entsprechend einer Kugeloberfläche geformte Boden-Wandelemente 48 eingefügt und befestigt sind. Zwischen diesen Boden-Wandelementen 48 entstehen die Schlitze 38 bis 45, die durch die Wandelemente 29 bis 37 getrennt sind. Quer dazu ist ein ebenso entlang einer Kugeloberfläche geformtes Boden-Wandelement 49 angebracht, das in dem Wandelement 33 endet. An diesem Wandelement ist in etwa 2/3 der Wandhöhe ein in die Schlitze 41, 42 reichendes Stielabtrennelement 46 angebracht. Das Stielabtrennelement 46 deckt ca. 1/3 der Schlitzbreite der Schlitze 41, 42 ab und ist auf der zum Korbboden 3 weisenden Seite mit einer Schneide 27 versehen. Die Schneide 27 ist zum Korbboden 3 hin in einem Winkel γ von 65° bis 85 ° geneigt. Dem Wandelement 33 gegenüber ist auf dem Boden-Wandelement 49 mit Bereich des Rings 47 eine Lasche 9 zur Befestigung des Stiels 10 angebracht. Der Sammelkorb 2 wird auf der Laschenseite durch ein gebogenes Oval 50 , das am über den Ring 47 hinausragenden Ende des Quer - Boden-Wandelement 49 angebracht ist, abgeschlossen.

Es ist jedoch auch möglich, den Korbboden 3 geschlossen aus durchsichtigem Kunststoff zu fertigen, an den sich die die Schlitze trennenden Wandelemente anschließen.

Für alle mit den Patentansprüchen 1, 3 und 8 vorgeschlagenen Lösungen gilt, dass der Sammelbehälter 2 aus allen dafür einsetzbaren starren Materialien wie z. B. Metall oder Kunststoff gefertigt werden kann. Es muss jedoch sichergestellt sein, dass der Sammelbehälter 2 durchschaubar ist. Im Falle der Verwendung von sichtdichten Materialien wie Metall oder eingefärbtem Kunststoff darf er deshalb keine geschlossenen Flächen aufweisen. Im Falle der Verwendung von durchsichtigem Kunststoff kann der Sammelbehälter, je nach Lösungsvariante, auch geschlossenwandig oder teilweise geschlossenwandig ausgeführt sein.

Die in der Lösung nach Anspruch 1 angegebenen Maße sind auch auf die Lösung nach Anspruch 3 anwendbar.

Im Folgenden wird ein Pflück - und Erntevorgang beschrieben. Je nach Standplatz der pflückenden Person wird die Neigung des Sammelbehälters 2 relativ zum Stiel 10 passend eingestellt. Je nach Lage der zu pflückenden Frucht am Baum wird der Sammelbehälter 2 nun von unten oder von der Seite an die Frucht so heranbewegt, dass sich die Frucht im Sammelbehälter 2 und der Stiel der Frucht in einem der Schlitze 5, 12, 13 oder 21, 22 oder 38 bis 45 befindet. Hierzu ist die Durchschaubarkeit des Sammelbehälters 2 dringend erforderlich. Die Frucht kann nun durch leichtes Ziehen und Drehen des Sammelbehälters 2 vom Zweig getrennt werden und liegt somit im Sammelbehälter 2. Bei Verwendung des Sammelbehälters 2 mit Stielabtrennvorrichtung 25, 26 oder 46 kann der Stiel der Frucht abgebrochen werden. Dies entspricht in etwa einem Pflückvorgang per Hand. Sind Früchte nah beieinander, können sie bei normaler Größe in einem Arbeitsgang miteinander gepflückt werden. Die Entleerung des Sammelbehälters 2 erfolgt vom Standplatz der pflückenden Person aus, in dem der Sammelbehälter 2 zu einem Transportbehälter bewegt und dort durch Drehen des Sammelbehälters 2 dieser entleert wird. Somit ist ein schonendes Entleeren der Früchtepflück-und Sammelvorrichtung in einen Transportbehälter möglich, ohne die Früchte mit der Hand zu berühren.

Die Vorrichtung eignet sich auch ohne eine Veränderung zur Aufnahme von Fallobst vom Boden. Entleerung wie oben beschrieben.

### Bezugszeichenliste:

- 1: Sammelbehälter
- 2: Boden, Korbboden
- 3: Korbwand
- 4: kugelförmige Korbwand
- 5: erster Schlitz
- 6: Umfangsstelle/ linie Korbboden 2/ Korbwand 3
- 7: Korböffnung
- 8: Mittelpunkt Korbboden
- 9: Lasche
- 9.1: Fläche der Lasche 9
- 10: Stiel
- 11: Halbe Höhe der Korbwand
- 12: Zweiter Schlitz
- 13: Dritter Schlitz
- 14: Übergangsstelle/ linie Korbboden 2/ Korbwand 3
- 15: Mittellinie Korbboden
- 16: Oberes Ende der Korbwand 4
- 17: Mittellinie erster Schlitz 5
- 18: Mittellinie zweiter Schlitz 12
- 19': Mittellinie dritter Schlitz 13
- 20: Senkrechte auf der Umfangs-Übergangslinie 6, 14
- α: Winkel zwischen Mittellinie 15 des Korbbodens und zweitem und drittem Schlitz
- β: Neigungswinkel zweiter und dritter Schlitz
- 21: Schlitz
- 22: Schlitz
- 23: Wandelement
- 24: Mittellinie Wandelement
- 25: Stielabtrennelement
- 26: Stielabtrennelement
- 27: Schneide Stielabtrennelement
- γ: Neigungswinkel Schneide des Stielabtrennelements
- 28: Extrabauteil Stielabtrennelement
- 29-37: Wandelemente
- 38-45: Schlitze
- 46: Stiebabtrennelement
- 47: Ring
- 48: Boden-Wandelente
- 49: Quer - Boden-Wandelement
- 50: Oval

## Patentansprüche

1. Früchtepflück- und Sammelvorrichtung 1, bestehend aus einem korbförmigen, runden, durchschaubaren und starren Sammelbehälter (2), mit einer Korbwand (4), die einen ersten Schlitz (5) und zwei weitere Schlitze (12, 13) links und rechts des ersten Schlitzes (5) aufweist, wobei diese Schlitze (12, 13) vom ersten Schlitz (5) beabstandet sind,
**dadurch gekennzeichnet,**
**dass** der Boden (3) des Sammelbehälters (2) kugelförmig nach unten ausgeformt und die Korbwand (4) kugelförmig ausgebildet ist, und der Sammelbehälter (2) eine Umfangs-Übergangslinie (6, 14) zwischen Korbboden (3) und Korbwand (4) aufweist,
**dass** eine flächige Lasche (9) zur Befestigung eines Stiels (10) an der Umfangs-Übergangslinie (6, 14) so angebracht ist, dass sie entlang einer Mittellinie (15) des Sammelbehälters (2) ausgerichtet ist und in die der Korböffnung (7) entgegengesetzte Richtung weist,
**dass** der erste Schlitz (5) der Lasche (9) gegenüber liegt, über die gesamte Höhe der Korbwand (4) reicht und senkrecht zur Umfangs-Übergangslinie (6, 14) ausgerichtet ist,
**dass** die zwei weiteren Schlitze (12, 13) über die gesamte Höhe der Korbwand (4) reichen und, ausgehend von der Umfangs-Übergangslinie (6, 14) in Richtung der Lasche (9) geneigt sind und
**dass** sie vom ersten Schlitz (5) innerhalb der, der Lasche (9) gegenüberliegenden Hälfte (4) des Sammelbehälters (2) beabstandet sind.

2. Früchtepflück- und Sammelvorrichtung nach Patentanspruch 1, **dadurch gekennzeichnet, dass** die Lasche (9) eine Verbindungsstelle für einen Stiel (10) aufweist, an der der Sammelbehälter (2) relativ zum Stiel (10) in Richtung der Stielachse verschwenkbar ist.

3. Früchtepflück- und Sammelvorrichtung, bestehend aus einem korbförmigen, runden, durchschaubaren und starren Sammelbehälter (2), mit einer Korbwand (4), die zwei voneinander beabstandete Schlitze (21, 22) aufweist,
**dadurch gekennzeichnet,**
**dass** sich diese Schlitze (21, 22) links und rechts einer Mittellinie (15) des Korbbodens (3) erstrecken,
**dass** der Boden (3) des Sammelbehälters (2) kugelförmig nach unten ausgeformt und dessen Korbwand (4) kugelförmig ausgebildet ist, und der Sammelbehälter (2) eine Umfang-Übergangslinie (6, 14) zwischen Korbboden (3) und Korbwand (4) aufweist,
**dass** eine flächige Lasche (9) zur Befestigung eines Stiels (10) an der Umfang-Übergangslinie (6, 14) so angebracht ist, dass sie entlang einer Mittellinie (15) des Sammelbehälters (2) ausgerichtet ist und in die der Korböffnung entgegengesetzte Richtung weist,
**dass** die Schlitze (21, 22) der Lasche (9) gegenüberliegen,
**dass** die zwei Schlitze (21, 22) über die gesamte Höhe der Korbwand (4) reichen, und dass die zwei Schlitze (21, 22) , ausgehend von der Umfang-Übergangslinie (6, 14) in Richtung der Lasche (9) geneigt sind, und wobei an dem zwischen den Schlitzen vorhandenen Wandsegment (23) in etwa 2/3 der Wandhöhe des Wandsegments ein in die Schlitze (21, 22) reichendes Stielabtrennelement (25, 26) angebracht ist.

4. Früchtepflück- und Sammelvorrichtung nach Patentanspruch 3, **dadurch gekennzeichnet, dass** die Stielabtrennelemente (25, 26) etwa ein Drittel der Schlitzbreite (21. 22) abdecken.

5. Früchtepflück- und Sammelvorrichtung nach den Patentansprüchen 3 und 4, **dadurch gekennzeichnet, dass** die Stielabtrennvorrichtung (25, 26) an ihrer dem Korbboden (3) zugewandten Seite eine Schneide (27) aufweist.

6. Früchtepflück- und Sammelvorrichtung nach den Patentansprüchen 3 bis 5, **dadurch gekennzeichnet, dass** die Schneide (27) der Stielabtrennvorrichtung (25, 26) zum Korbboden (3) hin geneigt ist.

7. Früchtepflück- und Sammelvorrichtung nach den Patentansprüchen 3 bis 6, **dadurch gekennzeichnet, dass** die der Mittellinie (24) zugewandte Seite der Schlitze (21, 22) senkrecht auf der Umfangslinie (6) des Korbbodens (3) steht und die der Mittellinie (24) abgewandte Seite der Schlitze (21, 22) in Richtung der Lasche (9) geneigt ist.

8. Früchtepflück- und Sammelvorrichtung, bestehend aus einem korbförmigen, runden, durchschaubaren und starren Sammelbehälter (2), mit einer Korbwand (4)
**dadurch gekennzeichnet,**
**dass** der Boden (3) des Sammelbehälters (2) kugelförmig nach unten ausgeformt und dessen Korbwand (4) kugelförmig ausgebildet ist und eine Umfang-Übergangslinie (6, 14) zwischen Korbboden (3) und Korbwand (4) aufweist,
**dass** die Korbwand (4) zehn Schlitze aufweist, die über die gesamte Höhe der Korbwand (4) reichen, sich links und rechts einer Mittellinie (15) des Korbbodens (3) und einer auf dieser Mittellinie (15) an der Übergangsstelle zwischen Korbboden (3) und Korbwand (4) senkrecht stehenden Wandstrebe (33) der Korbwand (4) erstrecken und jeweils durch ein senkrecht auf der Umfangs-Übergangslinie (6, 14) stehendes Wandelement (29-37) voneinander getrennt sind
**dass** eine flächige Lasche (9) zur Befestigung eines Stiels (10) an der Umfang-Übergangslinie (6, 14) so angebracht ist, dass sie entlang einer Mittellinie (15) des Sammelbehälters (2) ausgerichtet ist und in die der Korböffnung entgegengesetzte Richtung weist,
**dass** die Schlitze der Lasche gegenüberliegen, wobei an der Wandstrebe (33) in etwa 2/3 der Wandhöhe der Korbwand ein in die Schlitze reichendes Stielabtrennelement (46) angebracht ist.

9. Früchtepflück- und Sammelvorrichtung nach Patentanspruch 9, **dadurch gekennzeichnet, dass** das Stielabtrennelement(46) jeweils etwa ein Drittel der Schlitzbreite der Schlitze (41, 42) abdeckt und an ihrer dem Korbboden (3) zugewandten Seite eine Schneide (27) aufweist, wobei die Schneide (27) des Stielabtrennelements (46) zum Korbboden (3) hin geneigt ist.

## Claims

1. Fruit picking and collecting device (1) consisting of a basket-shaped, round, transparent and rigid collecting container (2) having a basket wall (4), which has a first slot (5) and two further slots (12, 13) on the left and right of the first slot (5), said slots (12, 13) being spaced from the first slot (5), **characterized in that**
the bottom (3) of the collecting container (2) is spherically shaped downwards, the basket wall (4) is spherical, and the collecting container (2) has a circumferential transition line (6, 14) between the basket bottom (3) and the basket wall (4),
a flat tab (9) for fastening a handle (10) is attached to the circumferential transition line (6, 14) so that it is aligned along a center line (15) of the collecting container (2) and pointing into a direction opposite the basket opening (7),
the first slot (5) is opposite the flat tab (9), extends over the entire height of the basket wall (4), and is aligned perpendicular to the circumferential transition line (6, 14), and
the two further slots (12, 13) extend over the entire height of the basket wall (4) and, starting from the circumferential transition line (6, 14), are inclined in the direction of the tab (9), and are spaced apart from the first slot (5) within the half of the collecting container (2) opposite the tab (9).

2. Fruit picking and collecting device according to claim 1, **characterized in that** the tab (9) has a connection for a handle (10) at which the collecting container (2) can be pivoted relative to the handle (10) in the direction of the handle axis.

3. Fruit picking and collecting device, consisting of a basket-shaped, round, transparent and rigid collecting container (2), with a basket wall (4) having two spaced-apart slots (21, 22), **characterized in that**
said slots (21, 22) extend to the left and right of a center line (15) of the basket bottom (3);
the bottom (3) of the collecting container (2) is shaped spherically downwards and the basket wall (4) is spherical and the collecting container (2) has a circumferential transition line (6, 14) between the basket bottom (3) and the basket wall (4);
a flat tab (9) for attaching a handle (10) is attached to the circumferential transition line (6, 14) so that it is aligned along a center line (15) of the collecting container (2) and in the direction opposite to the basket opening; the slots (21, 22) are opposite the tab (9),
the two slots (21, 22) extend over the entire height the basket wall (4) and the two slots (21, 22), starting from the circumferential transition line (6, 14), are inclined in the direction of the tab (9), and on the wall segment (23) present between the slots in about 2/3 of the wall height of the wall segment a handle separating element (25, 26) reaching into the slots (21, 22) is attached.

4. Fruit picking and collecting device according to claim 3, **characterized in that** the stem separating elements (25, 26) cover approximately one third of the slot width (21, 22).

5. Fruit-picking and collecting device according to any one of claims 3 and 4, **characterized in that** the stem-separating device (25, 26) has a cutting edge (27) on its side facing the basket base (3).

6. Fruit picking and collecting device according to any one of claims 3 to 5, **characterized in that** the cutting edge (27) of the stem separating device (25, 26) is inclined towards the bottom of the basket.

7. Fruit picking and collecting device according to any one of claims 3 to 6, **characterized in that** the side of the slots (21, 22) facing the center line (24) is perpendicular to the circumferential line (6) of the basket base (3), and the side of the slots (21, 22) remote to the center line (24) is inclined in the direction of the tab (9).

8. Fruit picking and collecting device, consisting of a basket-shaped, round, transparent and rigid collecting container (2) with a basket wall (4), **characterized in that**
the bottom (3) of the collecting container (2) is spherically shaped downwards and the basket wall (4) is spherical, and the collecting container (2) has a circumferential transition line (6, 14) between the basket bottom (3) and the basket wall (4),
the basket wall (4) comprises ten slots extending over the entire height of the basket wall (4) and extending to the left and right of a center line ( 15) of the basket base (3), said slots extending along a wall strut (33) of the basket wall (4), said strut (33) extending perpendicular from the center line (15) at the transition between the basket base (3) and the basket wall (4), said slots being separated by a wall element (29-37) which is perpendicular to the circumferential transition line (6, 14),
a flat tab (9) for fastening a handle (10) is attached to the circumferential transition line (6, 14) so that it is aligned along a center line (15) of the collecting container (2) and pointing into a direction opposite the basket opening (7),
the slots are opposite the flat tab (9), whereby in a wall strut (33) at about 2/3 of the wall height of the basket wall (4), a stem separating element (46) reaching into the slots (41, 42) is attached.

9. Fruit picking and collecting device according to claim 8, **characterized in that** the stem separating element (46) covers approximately one third of the slot width of the slots (41, 42), respectively, and having a cutting edge (27) on its side facing the basket base (3), the cutting edge (27) of the stem separating element (46) being inclined towards the bottom of the basket (3).

## Revendications

1. Dispositif de cueillette et de collecte de fruits 1, composé d'un récipient collecteur (2) en forme de corbeille, rond, transparent et rigide, avec une paroi de corbeille (4) qui présente une première fente (5) et deux autres fentes (12, 13) à gauche et à droite de la première fente (5), dans lequel ces fentes (12, 13) sont espacées de la première fente (5),
**caractérisé**
**en ce que** le fond (3) du récipient collecteur (2) a une forme sphérique vers le bas et la paroi de corbeille (4) a une configuration sphérique, et le récipient collecteur (2) présente une ligne de transition circonférentielle (6, 14) entre le fond de corbeille (3) et la paroi de corbeille (4),
**en ce qu'**une patte plate (9) pour la fixation d'un manche (10) est montée sur la ligne de transition circonférentielle (6, 14) de manière à être orientée le long d'une ligne médiane (15) du récipient collecteur (2) et à être dirigée dans la direction opposée à l'ouverture de corbeille (7),
**en ce que** la première fente (5) est située en face de la patte (9), s'étend sur toute la hauteur de la paroi de corbeille (4) et est orientée perpendiculairement à la ligne de transition circonférentielle (6, 14),
**en ce que** les deux autres fentes (12, 13) s'étendent sur toute la hauteur de la paroi de corbeille (4), sont inclinées en direction de la patte (9) à partir de la ligne de transition circonférentielle (6, 14) et
**en ce qu'**elles sont espacées de la première fente (5) à l'intérieur de la moitié (4) du récipient collecteur (2) située en face de la patte (9).

2. Dispositif de cueillette et de collecte de fruits selon la revendication 1, **caractérisé en ce que** la patte (9) comporte un point de liaison pour un manche (10), sur lequel le récipient collecteur (2) est apte à pivoter par rapport au manche (10) dans la direction de l'axe de manche.

3. Dispositif de cueillette et de collecte de fruits, composé d'un récipient collecteur (2) en forme de corbeille, rond, transparent et rigide, avec une paroi de corbeille (4) qui présente deux fentes (21, 22) espacées l'une de l'autre,
**caractérisé**
**en ce que** ces fentes (21, 22) s'étendent à gauche et à droite d'une ligne médiane (15) du fond de corbeille (3),
**en ce que** le fond (3) du récipient collecteur (2) a une forme sphérique vers le bas et la paroi de corbeille (4) de ce dernier a une configuration sphérique, et le récipient collecteur (2) présente une ligne de transition circonférentielle (6, 14) entre le fond de corbeille (3) et la paroi de corbeille (4),
**en ce qu'**une patte plate (9) pour la fixation d'un manche (10) est montée sur la ligne de transition circonférentielle (6, 14) de manière à être orientée le long d'une ligne médiane (15) du récipient collecteur (2) et à être dirigée dans la direction opposée à l'ouverture de corbeille (7),
**en ce que** les fentes (21, 22) sont situées en face de la patte (9),
**en ce que** les deux fentes (21, 22) s'étendent sur toute la hauteur de la paroi de corbeille (4), et en ce que les deux fentes (21, 22) sont inclinées dans la direction de la patte (9) à partir de la ligne de transition circonférentielle (6, 14), et dans lequel sur le segment de paroi (23) présent entre les fentes est monté dans environ 2/3 de la hauteur de paroi du segment de paroi un élément de séparation de manche (25, 26) qui s'étend dans les fentes (21, 22).

4. Dispositif de cueillette et de collecte de fruits selon la revendication 3, **caractérisé en ce que** les éléments de séparation de tige (25, 26) couvrent environ un tiers de la largeur de fente (21, 22).

5. Dispositif de cueillette et de collecte de fruits selon les revendications 3 et 4, **caractérisé en ce que** le dispositif de séparation de tige (25, 26) comporte sur son côté tourné vers le fond de corbeille (3) un tranchant (27).

6. Dispositif de cueillette et de collecte de fruits selon les revendications 3 à 5, **caractérisé en ce que** le tranchant (27) du dispositif de séparation de tige (25, 26) est incliné en direction du fond de corbeille (3).

7. Dispositif de cueillette et de collecte de fruits selon les revendications 3 à 6, **caractérisé en ce que** le côté des fentes (21, 22) tourné vers la ligne médiane (24) est perpendiculaire à la ligne circonférentielle (6) du fond de corbeille (3) et le côté des fentes (21, 22) opposé à la ligne médiane (24) est incliné dans la direction de la patte (9).

8. Dispositif de cueillette et de collecte de fruits, composé d'un récipient collecteur (2) en forme de corbeille, rond, transparent et rigide, avec une paroi de corbeille (4), **caractérisé**
**en ce que** le fond (3) du récipient collecteur (2) a une forme sphérique vers le bas et la paroi de corbeille (4) de ce dernier a une configuration sphérique et présente une ligne de transition circonférentielle (6, 14) entre le fond de corbeille (3) et la paroi de corbeille (4),
**en ce que** la paroi de corbeille (4) présente dix fentes qui s'étendent sur toute la hauteur de la paroi de corbeille (4), s'étendent à gauche et à droite d'une ligne médiane (15) du fond de corbeille (3) et d'un montant de paroi (33) de la paroi de corbeille (4) situé perpendiculairement sur cette ligne médiane (15) au point de transition entre le fond de corbeille (3) et la paroi de corbeille (4) et sont séparées respectivement par un élément de paroi (29-37) situé perpendiculairement sur la ligne de transition circonférentielle (6, 14),
**en ce qu'**une patte plate (9) pour la fixation d'un manche (10) est montée sur la ligne de transition circonférentielle (6, 14) de manière à être orientée le long d'une ligne médiane (15) du récipient collecteur (2) et à être dirigée dans la direction opposée à l'ouverture de corbeille,
**en ce que** les fentes sont situées en face de la patte, dans lequel sur le montant de paroi (33) est monté dans environ 2/3 de la hauteur de paroi de la paroi de corbeille un élément de séparation de tige (46) qui s'étend dans les fentes.

9. Dispositif de cueillette et de collecte de fruits selon la revendication 9, **caractérisé en ce que** l'élément de séparation de tige (46) couvre environ un tiers de la largeur de fente des fentes (41, 42) et comporte sur son côté tourné vers le fond de corbeille (3) un tranchant (27), dans lequel le tranchant (27) de l'élément de séparation de tige (46) est incliné en direction du fond de corbeille (3).
